(19)

Europäisches
Patentamt
European
Patent Office
Office européen
des brevets

(11) **EP 2 439 526 A1**

(12) **EUROPEAN PATENT APPLICATION**
published in accordance with Art. 153(4) EPC

(43) Date of publication:
**11.04.2012 Bulletin 2012/15**

(21) Application number: **10783309.7**

(22) Date of filing: **27.05.2010**

(51) Int Cl.:
**G01N 27/80** *(2006.01)*

(86) International application number:
**PCT/JP2010/058977**

(87) International publication number:
**WO 2010/140525 (09.12.2010 Gazette 2010/49)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **04.06.2009 JP 2009134727**

(71) Applicant: **NTN Corporation**
**Osaka-shi, Osaka 550-0003 (JP)**

(72) Inventors:
• **MIZUTANI, Masatoshi**
**Iwata-shi**
**Shizuoka 438-0037 (JP)**

• **OKADA, Koichi**
**Iwata-shi**
**Shizuoka 438-0037 (JP)**
• **KOIKE, Shunsuke**
**Iwata-shi**
**Shizuoka 438-0037 (JP)**

(74) Representative: **Behrmann, Niels**
**Behrmann Wagner Vötsch**
**Patentanwälte**
**Hegau-Tower**
**Maggistraße 5 (10. OG)**
**78224 Singen (DE)**

(54) **HARDENING QUALITY INSPECTION DEVICE AND HARDENING QUALITY INSPECTION METHOD**

(57)    A hardening quality evaluating apparatus and a hardening quality evaluating method, both of which are effective to accurately evaluate, on a non-destructive basis, the hardening quality of an object to be inspected, is provided. The apparatus includes an electric power supply electrode held in contact with an object to be inspected, an electric power source for applying an alternating current to the object through the electric power supply electrode, a magnetic field sensor for measuring a magnetic field developed by an electric current flowing through the object, and a quality determining unit for measuring the hardening quality of the object through the magnetic field measured by the magnetic field sensor.

Fig. 2

## Description

CROSS REFERENCE TO THE RELATED APPLICATION

This application is based on and claims Convention priority to Japanese patent application No. 2009-134727, filed June 4, 2009, the entire disclosure of which is herein incorporated by reference as a part of this application.

BACKGROUND OF THE INVENTION

(Field of the Invention)

The present invention relates to a hardening quality evaluating apparatus and a hardening quality evaluating method, both for evaluating the hardening quality such as, a distribution of hardness and a hardening depth of a steel product.

Description of Related Art

It is well known that products having rolling elements, such as bearings are generally subjected to a hardening treatment including a heat treatment and/or a tempering treatment. Of the hardening treatment, surface hardening treatments such as, the induction hardening, the carburizing or the carbonitriding require an inspection to be performed on a resultant surface hardened layer for the purpose of guaranteeing the quality of such surface hardened layer. At the time of this inspection, an actual product is cut to expose a cut surface and the measurement of the hardened layer of the product is performed at the cut surface by measuring the depth of the hardened layer from a surface of the product. Where the actual product is unable to be cut, a test piece is subjected to a heat treatment within the same furnace as used with the actual product and is then cut to expose a cut surface, followed by measurement of the depth of the hardened layer in a manner similar to that described hereinbefore so that the depth of the hardened layer of the actual product can be warranted.

As discussed above, the conventional evaluation of the depth of the hardened layer of the heat treated products having rolling elements is a sort of the destructive inspection that requires the product to be cut during the inspection. Since in such case the product is destroyed, there has been recognized a problem associated with an increase of the material cost. Also, cutting of the product and measurement of the hardness in a direction depthwise of the cut product with the use of a hardness testing machine requires a substantial amount of time, resulting in a problem associated with an increase of the number of process steps.

Where the product is unable to be cut in readiness for the measurement of the depth of the hardened layer, the guarantee is generally made by way of the test piece as hereinbefore discussed. Considering that the inspection with the test piece is naturally not an inspection with the actual product, a problem has been recognized that the guarantee made by way of that given to the test piece lacks reliability.

In view of the foregoing, in order to alleviate the above discussed problems and inconveniences, a method of inspecting the hardened layer on a non-destructive basis has been suggested. One of the non-destructive inspecting methods is a potential difference method in which the measurement is carried out by the utilization of a change in electroconductivity that has taken place as a result of the hardening. According to the known potential difference method, an electric direct current is passed to an object to be inspected through a current applying probe held in contact with the object to be inspected so that the potential difference between two additional probes then held spacedly in contact with the object to be inspected at a location different from the contact position of the current applying probe can be measured to determine the hardening depth. (In this respect, see, for example, the patent documents 1 and 2 listed below.)

[Patent Document 1] JP Laid-open Patent Publication No. 2004-309355
[Patent Document 2] JP Laid-open Patent Publication No. 2007-064817

DISCLOSURE OF THE INVENTION

It has, however, been found that the previously discussed non-destructive inspecting method is effective in measurement of the hardening depth because of the electric direct current applied to the object to be inspected, but is unable to measure a distribution of the hardness in the in-depth or depthwise direction. In order to enhance the reliability of the guarantee on the hardening quality, both of an evaluation of the hardening depth and an evaluation of the distribution of the in-depth hardness are required.

In order to substantially eliminate the foregoing problems and inconveniences inherent in the prior art inspection methods, the applicant or assignee of the present invention has suggested a method of determining the hardening depth by measuring the potential difference between two probes held in contact with an object to be inspected at respective locations different from the contact position of the electric current applying probe, while an electric alternating current is supplied to the object to be inspected (In this respect, see the Japanese Patent Application No. 2009-088813.). According to this suggested method, since the depth, to which the electric current is applied, can be controlled by changing the frequency of the electric current, the hardness distribution in the in-depth direction can be detected. However, the method, in which the resistance is measured, is apt to be affected by a contact resistance between the probe and the object to be inspected. In such case, a problem arises that depending on the status of contact between the probe and the object to be inspected, the resistance may change to such an extent as to result in an insufficient detection.

An object of the present invention is to provide a hardening quality evaluating apparatus and a hardening quality evaluating method, both of which are effective to accurately evaluate, on a non-destructive basis, the hardening quality of an object to be inspected.

For facilitating an easy understanding of the present invention, the following description will be made with the use of reference numerals used in the accompanying drawings to describe preferred embodiments of the present invention.

The hardening quality evaluating apparatus of the present invention is an apparatus for evaluating the hardening quality by applying an electric current to an object 1 to be inspected and then measuring a magnetic field developed by an electric current flowing through the object 1 to be inspected, which apparatus includes electric power supply electrodes 2, 2 adapted to be held in contact with a surface of the object 1 to be inspected, an electric power source 4 for supplying the electric current to the object 1 through the electric power supply electrodes 2, 2, a magnetic field sensor 5 for measuring the magnetic field developed by the electric current flowing from the electric power source 4 through the object 1 to be inspected, and a quality determining unit 18 for measuring the hardening quality of the object 1 through the magnetic field measured by the magnetic field sensor 5.

According to the above described construction, a pair of electric power supply electrodes 2 and 2 are held in contact with a surface of the object 1 to be inspected and the electric current is supplied from the electric power source 4 through the electric power supply electrodes 2 and 2. In this condition, the magnetic field developed by the electric current flowing through the object 1 to be inspected is measured by the magnetic field sensor 5. The quality determining unit 18 determines the hardening quality of the object 1 through the magnetic field measured by the magnetic field sensor 5. By way of example, a change in a cross section area of a magnetic path of the magnetic field is exhibited as a change in magnetic resistance and, based on this change in magnetic resistance, the hardening quality such as, the hardness or the hardening depth of the object 1 to be inspected is determined.

Hardening results in a change of the magnetic permeability and the electroconductivity of the steel material. In general, the higher the hardness of the steel material resulting from the hardening, the lower the magnetic permeability and the electroconductivity. As a result, depending on the hardness and depth, the electric current flowing through the object to be inspected changes. Accordingly, when the change in a cross section area of a magnetic path of the magnetic field developed by the electric current is measured by the magnetic field sensor, a change of the electric current is detected.

The depth in which the electric current flows in the object 1 to be inspected changes depending on the frequency f due to the skin effect, the electroconductivity $\sigma$, and the magnetic permeability $\mu$. The depth $\delta$, in which the electric current flows, is expressed by the following equation:

$$\delta = \sqrt{(1/\pi f \sigma \mu)} \cdots\cdots\quad (1)$$

From the equation (1) above, the skin depth in which the electric current flows in the object 1 to be inspected changes depending on the frequency. For this reason, by changing the frequency, the measurement can be performed while the depth in which the electric current flows is changed. By way of example, when a high frequency electric current is passed, since the electric current merely flows in a surface of the object 1 to be inspected, the hardness of the surface of the object 1 to be inspected can be obtained. If the frequency is gradually lowered from the high frequency side, the skin depth of the electric current increases. Accordingly, when the magnetic field is measured with the frequency, for example, gradually decreased down from the high frequency side, the distribution of the hardness in the in-depth direction can be estimated. In this way, the hardening quality of the object 1 to be inspected can be accurately evaluated on a non-destructive basis.

The electric power source 4 may include an oscillator circuit 19 with varying frequency. Through the magnetic field measured by the magnetic field sensor 5 while the frequency is changed by the oscillator circuit 19, the hardening quality of the object 1 to be inspected can be determined. It is to be noted that "to measure by the magnetic sensor 5 while the frequency is changed" hereinabove described and hereinafter is to be understood as including a step of changing the frequency and a step of measuring a change of the intensity of or the magnitude and the direction of the magnetic field at the frequency so changed, that is, a change in a cross section area of a magnetic path of the magnetic field.

If the magnetic field sensor 5 is arranged between a pair of electric power supply electrodes 2 and 2 held in contact with the object 1 to be inspected, the magnetic field developed by the electric current can be stably and further accurately measured. Also, compactization of the apparatus can be realized.

The quality determining unit 18 may include a change of frequency instructing section 20b for changing the frequency, outputted by an alternating electric power source, to various values and may have a function of determining the hardening quality by measuring the magnetic field at the various frequencies so changed by the change of frequency instructing section 20b. The change of the frequency to various values may take place progressively, that is, gradually, or may be effected so as to repeat an increase and a decrease of the frequency. By way of example, the change of frequency instructing section 20b may stepwise change the frequency from the high frequency side towards a low frequency side or from the low frequency side towards the high frequency and the intensity of or the magnitude and the direction of the magnetic field at the frequency so changed stepwise may be measured. Also, while the change of frequency instructing section 20b continuously changes the frequency from the high frequency side towards the low frequency side, the intensity of or the magnitude and the direction of the magnetic field at each of some frequencies selected from the changed frequencies may be measured. Where the quality determining unit 18 includes the change of frequency instructing section 20b, the change can readily be accomplished so that the frequency appropriate to obtain the hardening quality, which is a target of the evaluation, can be attained.

The quality determining unit 18 may determine, as the hardening quality, at least one of the surface hardness of the object 1 to be measured, the hardness distribution in an in-depth direction and the hardening depth.

The magnetic field sensor 5 may be surface mounted on a sensor substrate which is in turn integrally secured to a sensor housing 13, made of a non-magnetic material, together with the pair of the electric power supply electrodes 2 and 2. According to this structure, the magnetic sensor 5 and the pair of the electric power supply electrodes 2 and 2 are integrated together in face-to-face relation with the object 1 to be inspected. Since the relative distance between the magnetic field sensor 5 and the electric power supply electrodes 2 and 2 is fixed, there is no need to adjust the position of the magnetic field sensor 5 relative to the electric power supply electrodes 2 each time the object 1 to be inspected changes, and, accordingly, not only can the evaluation of the hardening quality be facilitated, but also the hardening quality can be further accurately evaluated.

The hardening quality evaluating apparatus may be used in evaluating the hardening quality of a device having rolling elements or a component in a device having rolling elements. The device having rolling elements referred to above may include, for example, a rolling bearing, a ball screw or a ball joint and the rolling elements may include, for example, a ball or roller. The component in a device having rolling elements referred to above is a component forming the device having rolling elements and include, for example, a raceway ring of a bearing, a screw shaft and a nut of the ball screw, or a joint component having a surface that is held in rolling contact with the rolling element of the ball joint. Since in the device having rolling elements and the component in a device having rolling elements the hardening quality is an important factor in performance, the advantage of the present invention that the hardening quality can be determined on a non-destructive basis can be effectively enhanced.

The use may be made of an electric current path changing unit 26 for changing the electric current path flowing through the object 1 to be inspected, in which case the magnetic field sensor 5 measures the magnetic field generated for each electric current path so changed and the quality determining unit 18 determines the hardening quality of the object 1 through a plurality of magnetic fields measured by the magnetic field sensor 5 for each electric current path so changed. In this case, by calculating, for example, an average value of respective magnitudes of a plurality of magnetic fields measured for each electric current path, a problem that the measuring accuracy tends to be reduced because the magnitudes of the magnetic fields differ from each other due to the varying electric current paths can be resolved.

The quality determining unit 18 may have a function of averaging measured values of the plurality of the magnetic fields. In this case, regardless of the path of the electric current flowing in the object 1 to be inspected, the hardness distribution can be further accurately estimated.

The electric current path changing unit 26 may be of a type in which the magnetic field sensor 5 and the electric power supply electrodes 2 and 2 are made rotatable together, in which case the magnetic field sensor 5 and the electric power supply electrodes 2 and 2, which are integrated, are so structured as to be angularly displaceable relative to the object 1 to be inspected. In this case, at least one pair of the electric power supply electrodes 2 and 2 are sufficient and, hence, the number of component parts can be reduced. Also, since the magnetic field sensor 5 and the electric power supply electrodes 2 and 2 are rotated together, handling of the magnetic field sensor 5 and the electric power supply electrodes 2 and 2 are easy to achieve, resulting in enhancement of the workability.

The use may be made of a fixing member 27 (27A) for fixing a plurality of electric power supply electrodes 2, in which case the electric current path changing unit 26 supplies an electric current sequentially to one of paths between the predetermined electric power supply electrodes 2 and 2 out of the plural electric power supply electrodes.

The magnetic field sensor 5 may be rotatable (angularly displaceable) relative to the fixing member 27A and may be capable of measuring the magnetic field developed by the electric current flowing between the electric power supply electrodes 2 and 2, which current is supplied sequentially to any one of the paths. In this case, for example, the magnetic field sensor 5 can be accurately angularly displaced in a direction of detection of the magnetic field that is perpendicular to the direction of the electric current. In the meantime, where the magnetic field developed by the electric current does not coincide with the direction of the magnetic field detected by the magnetic field sensor 5, a detection value need be corrected. However, where the magnetic field sensor 5 is angularly displaced as described above, correction of the detection value is no longer necessary or only the required minimum correction of the detection value is necessary and, therefore, the measuring accuracy can be increased.

The use may be made of a fixing member 27A for fixing a pair or a plurality of pairs of electric power supply electrodes 2 and 2, the fixing member 27A being made rotatable (angularly displaceable) relative to the magnetic field sensor 5. Even in this case, correction of a detection value is eliminated or reduced to a minimum.

The hardening quality evaluating method of the present invention is a method for evaluating the hardening quality by applying an electric current to an object 1 to be measured and then measuring a magnetic field developed by the electric current flowing through the object to be inspected, which method includes (i) applying a direct current of a certain current value or an alternating current of a certain current value and a certain frequency to the object to be inspected, (ii) measuring the magnetic field developed by an electric current caused by the applied electric current so as to flow through the object to be inspected, and repeating the steps (i) and (ii) above by changing the certain electric current value or the certain frequency to a different value to thereby determine the hardening quality of the object by means of those measured magnetic fields.

As hereinbefore described, the skin depth, in which the electric current flows in the object 1 to be inspected, varies with the frequency. For this reason, by changing the frequency of the alternating current, the magnetic field can be measured while the skin depth, in which the electric current flows through the object 1 to be inspected, is varied. Therefore, a distribution of the hardness in an in-depth direction can be estimated. Also, by measuring the intensity of or the magnitude and the direction of the magnetic field for each different current value, the hardening quality of the object 1 to be inspected can be measured.

As the hardening quality, at least one of a surface hardness of, a hardness distribution in an in-depth direction of, and a hardening depth of the object 1 to be inspected may be evaluated.

BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:

Fig. 1 is an explanatory diagram showing a hardening quality evaluating method according to a first preferred embodiment of the present invention;

Fig. 2 is a block diagram showing a conceptual construction of a hardening quality evaluating apparatus employed to execute the hardening quality evaluating method shown in Fig. 1;

Fig. 3 is a block diagram showing a conceptual construction of the hardening quality evaluating apparatus according to a second preferred embodiment of the present invention;

Fig. 4 is a schematic top plan view showing a conceptual construction of an important portion of the hardening quality evaluating apparatus according to a third preferred embodiment of the present invention;

Fig. 5 is a block diagram showing the conceptual construction of the hardening quality evaluating apparatus shown in Fig. 4;

Fig. 6 is a schematic top plan view showing a conceptual construction of an important portion of the hardening quality evaluating apparatus according to a fourth preferred embodiment of the present invention;

Fig. 7 is a schematic top plan view showing a conceptual construction of an important portion of the hardening quality evaluating apparatus according to a fifth preferred embodiment of the present invention;

Fig. 8 is a schematic top plan view showing a conceptual construction of an important portion of the hardening quality evaluating apparatus according to a sixth preferred embodiment of the present invention;

Fig. 9 is a block diagram showing the conceptual construction of the hardening quality evaluating apparatus shown in Fig. 8;

Fig. 10 is a schematic top plan view showing a conceptual construction of an important portion of the hardening quality evaluating apparatus according to a seventh preferred embodiment of the present invention;

Fig. 11 is a block diagram showing the conceptual construction of the hardening quality evaluating apparatus shown in Fig. 10;

Fig. 12A is a schematic top plan view showing a conceptual construction of an important portion of the hardening quality evaluating apparatus according to an eighth preferred embodiment of the present invention;

Fig. 12B is a diagram showing a structural example illustrating the relationship between a magnetic field sensor and electric power supply electrodes, both of the sensor and the electrodes employed in the hardening quality evaluating apparatus shown in Fig. 12A; and

Fig. 13 is a diagram showing one example of use of the hardening quality evaluating apparatus shown in Fig. 1 to Figs. 12A and 12B.

DESCRIPTION OF PREFERRED EMBODIMENTS

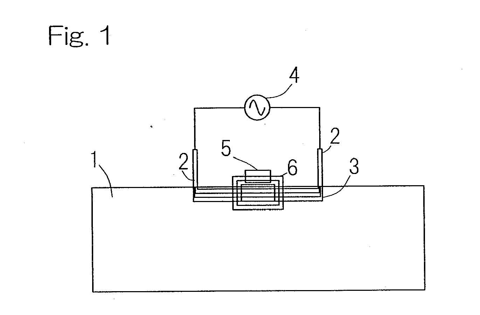

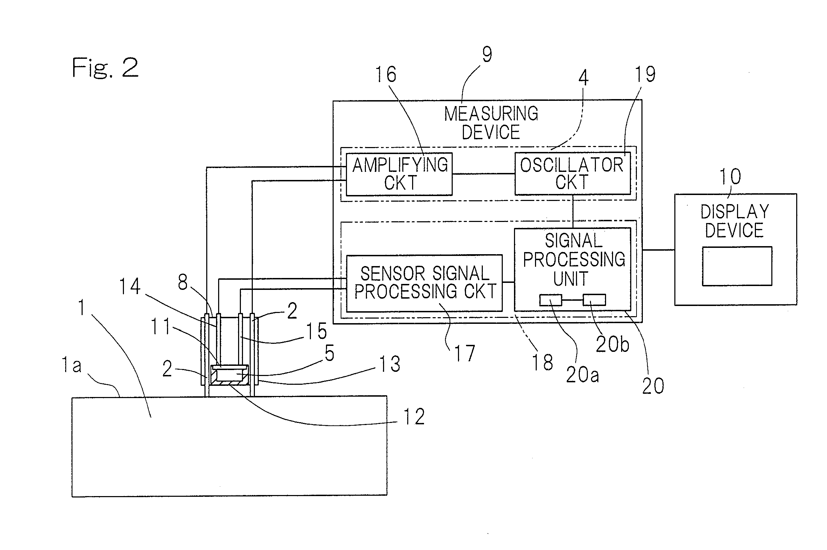

A first preferred embodiment of the present invention will be described in detail with particular reference to Figs. 1 and 2. In the first place, a basic structure of a hardening quality evaluating apparatus according to the first embodiment of the present invention will be discussed, noting that the description that follows includes that of a hardening quality evaluating method. The hardening quality evaluating method is designed to evaluate the hardening quality by applying an electric current to an object to be inspected and measuring the magnetic field developed by an electric current flowing through the object to be inspected. The object to be inspected is a heat treated or hardened steel product such as, a bearing or a bearing component, although not exclusively limited thereto.

In the instance as shown, as the electric current supplied, an electric alternating current is employed. As shown in Fig. 1, the alternating current is supplied, that is, applied from an electric power source 4, which is an alternating current power source, to the object 1 through a pair of electric power supply electrodes 2 and 2 held in contact with the object 1. With the alternating current applied to the object 1, the magnetic field 6 developed by an electric current 3 flowing through the object 1 to be inspected is measured by a magnetic field sensor 5 provided on the object 1. The magnetic field sensor 5 is a sensor for detecting the intensity of or the magnitude and the direction of the magnetic field and outputs, for example, a voltage value. The term "magnetic field sensor" referred to hereinbefore and hereinafter is to be understood as including a magnetic sensor.

As is well known to those skilled in the art, hardening brings about a change in magnetic permeability and electroconductivity of a steel material. In general, the higher the hardness of the steel material, the lower the magnetic permeability and the electroconductivity. Accordingly, the electric current flowing through the object 1 to be inspected depends on the hardness and the depth of the object 1. When the intensity or magnitude of the magnetic field developed by the electric current is measured, the electric current flowing through the object can be detected.

The depth δ of the object 1, to which the electric current flows, varies depending on the frequency f, the electroconductivity σ and the magnetic permeability μ by the skin effect. The depth δ at which the electric current flows is expressed by the following equation.

$$\delta = \sqrt{(1/\pi f \sigma \mu)} \cdots\cdots (1)$$

As is clear from the equation (1) above, the skin depth δ, at which the electric current flows in the object 1 to be inspected, varies depending on the frequency f. Accordingly, if the frequency f is changed, measurement can be carried out while the depth δ at which the electric current flows is changed. By way of example, when a high frequency current is supplied, since the electric current flows only in a surface of the object 1 to be inspected, one can know the hardness of the surface of the object 1 to be inspected. If the frequency is gradually reduced from a high frequency side, the depth δ of penetration of the electric current increases. Accordingly, if, for example, the magnetic field is measured while the frequency f is being reduced from the high frequency side, a distribution of the hardness in the in-depth direction can be estimated. In this way, the hardening quality of the object 1 to be inspected can be accurately evaluated on a nondestructive basis.

Fig. 2 illustrates a conceptual construction of the hardening quality evaluating apparatus according to the first preferred embodiment of the present invention, which is used to execute the hardening quality evaluating method shown in and described with particular reference to Fig. 1. This hardening quality evaluating apparatus includes a probe 8 functioning as a detecting head, a measuring device 9 and a display device 10. The probe 8 is of an unitary structure including a pair of electric power supply electrodes 2 and 2 adapted to be held in contact with a surface 1a of the object 1 and a magnetic field sensor 5 for measuring the magnetic field developed by the electric current supplied from the electric power source 4 and then flowing in the object 1. In other words, the magnetic field sensor 5 is surface mounted on a sensor substrate 11 which is in turn fixed to a sensor housing 13 by means of a molding material 12 or the like. The sensor housing 13 is preferably made of a non-magnetic material such as, a resin.

Electrodes 14 and 15, which is power supply lines leading to the sensor substrate 11, and the pair of the electric power supply electrodes 2 and 2 are fixed to the sensor housing 13. Each of the electric power supply electrodes 2 is in the form of a bar having at least one end thereof protruding from an end face of the sensor housing 13. The electric power supply electrodes 2 and 2 are disposed parallel to each other and spaced a predetermined distance from each other and the magnetic field sensor 5 is disposed between those electric power supply electrodes 2 and 2. The respective electric power supply electrode 2 has the other end electrically connected with an amplifying circuit 16 employed in the measuring device 9 as will be detailed later, and the electrodes 14 and 15 fixed to the sensor substrate 11 are electrically connected with a sensor signal processing circuit 17 in the measuring device 9 as will be detailed later.

The measuring device 9 includes the electric power source 4 and a quality determining unit 18.

The electric power 4 in turn includes a frequency variable oscillator circuit 19 and the amplifying circuit 16 for amplifying an alternating current signal, outputted from the oscillator circuit 19, and then supplying, that is, applying an electric current to be supplied to the object 1 to be inspected. The oscillator circuit 19 is electrically connected with a signal processing unit 20 and is operable to change the frequency and/or the amplitude according to an instruction from the signal processing unit 20.

The quality determining unit 18 is operable to measure the hardening quality of the object 1 in reference to the magnetic field, which has been measured by the magnetic field sensor 5 while the frequency of the alternating current is changed by the oscillator circuit 19. This quality determining unit 18 includes the sensor signal processing circuit 17 for processing a signal from the magnetic field sensor 5 and the signal processing unit 20 for estimating the hardening depth and the hardness distribution from the magnetic sensor signal that has been measured.

The signal processing unit 20 referred to above is operable to estimate, as the hardening quality, the surface hardness of the object 1 to be inspected, the hardness distribution in the in-depth direction and the hardening depth (those three parameters are hereinafter referred to "information on the hardness" in reference to a relation between the voltage value corresponding to the amount of change in magnetic resistance for each of quality parameters and a preset quality value for each quality parameter in a manner as will be described later. It is, however, to be noted that it may be designed to measure at least only one of the surface hardness of, the hardness distribution in the in-depth direction of and the hardening depth of the object 1 to be inspected. The signal processing unit 20 is made up of a determining section 20a and a change of frequency instructing section 20b.

The determining section 20a is operable to determine an abnormality in quality, that is, a hardening abnormality in the event that the hardening quality determined lowers below the preset quality value. In other words, the determining section 20a is made up of electronic circuits or the like capable of calculating the hardness or the like in the in-depth direction. The hardness is proportional to the signal processed by the sensor signal processing circuit 17. This determining section 20a includes a relation instruction (not shown) in which the relation between the signal referred to above and the information on the hardness in the in-depth direction is expressed in the form of a calculating equation or a table. The determining section 20a is also operable to calculate the hardness in the in-depth direction by applying the signal, based on the intensity of or the magnitude and the direction of the magnetic field measured against the relation instruction.

The preset quality value referred to previously is a threshold value appropriately set up by determining through a series of experiments and is stored in a storage medium or the like such as, a rewritable storage medium. The determining section 20a referred to above determines whether or not the hardness in an arbitrary depth calculated with reference to the relation instruction lowers below the preset quality value at that depth. If the hardness previously calculated lowers below the preset quality value, the abnormality in quality is determined.

The change of frequency instructing section 20b referred to previously supplies to the oscillator circuit 19 of the alternating current source 4 an instruction to variably set the frequency and the amplitude of the alternating current signal. In response to the instruction from this change of frequency instructing section 20b, the frequency and the amplitude of the alternating current signal outputted from the oscillator circuit 19 are variably set. This change of frequency instructing section 20b may be of a type, in which rules of change or the like are set in a plurality of types in correspondence with types of the hardening quality desired to be attained and types of the object 1 to be inspected so that one of those rules of change can be selected as desired in response to a suitable input. The rules of change referred to above includes, for example, the range of change, that is, the amount of change within which the frequency and the amplitude are to be changed, the frequency of changes, a recurrent period of change and so on.

After the determining section 20a has calculated the hardness at the arbitrary depth as hereinbefore described, the change of frequency instructing section 20b issues an instruction to change the frequency to the oscillator circuit 19, maintaining the location of the inspection of the object 1. Accordingly, the skin depth at which the electric current flows in the object 1 to be inspected changes. A signal based on the intensity of or the magnitude and the direction of the magnetic field measured in such case is applied to the relation instruction referred to previously to thereby calculate the hardness at a depth different from the arbitrary depth. By repeating the change of the frequency in this way, the determining section 20a can estimate the distribution of the hardness in the in-depth direction. It is to be noted that signals based on the intensity of or the magnitude and the direction of the magnetic field at a plurality of frequencies are once stored so that the distribution in the in-depth direction of the hardness can be estimated.

The measuring device 9 referred to previously is electrically connected with a display device 10 through a drive circuit not shown. This display device 10 may be embodied in the form of a liquid crystal display, an organic EL display, a CRT display, a printer or the like. This display device 10 is operable to display the hardening quality measured by the quality determining unit 18. More specifically, a result of calculation of the hardness distribution estimated by the signal processing unit 20, a result of calculation of the hardening depth and the presence or absence of the abnormality in hardening, for example, are displayed.

When the hardening quality evaluating apparatus of the structure hereinbefore described is employed to execute the previously described hardening quality evaluating method, the hardening quality of the object 1 to be inspected can be accurately evaluated on a non-destructive basis.

Where the magnetic field sensor 5 is disposed between the electric power supply electrodes 2 and 2 held in contact with the object 1 to be inspected, the magnetic field generated by the electric current can be stably and further accurately measured. Also, downsizing and compactization of the probe 8 can be achieved. Accordingly, various objects having different shapes can be measured with this probe 8. In view of this, the versatility of the hardening quality evaluating apparatus can be enhanced.

Where the quality determining unit 18 includes the change of frequency instructing section 20b, the frequency appropriate to determine the hardening quality aimed at by the evaluation can be easily changed. Where the hardening quality evaluating apparatus includes the display device 10 for displaying the hardening quality measured by the quality determining unit 18, the hardening quality displayed on this display device 10 can be visually checked and the efficiency of evaluation can be increased.

Since the magnetic field sensor 5 is fixed to the sensor housing 13 integrally together with the electric power supply electrodes 2 and 2, the probe 8, in which the sensor 5 and the electrodes 2 and 2 are provided integrally, can be used as held in face-to-face relation with the object 1 to be inspected. Since the relative distance between the magnetic field sensor 5 and the pair of the electric power supply electrodes 2 and 2 is fixed, there is no need to adjust the position of the magnetic field sensor 5 relative to the electric power supply electrodes 2 and 2 each time the object to be inspected changes, and, accordingly, not only can the evaluation of the hardening quality be eased, but also the hardening quality evaluation can be further accurately performed.

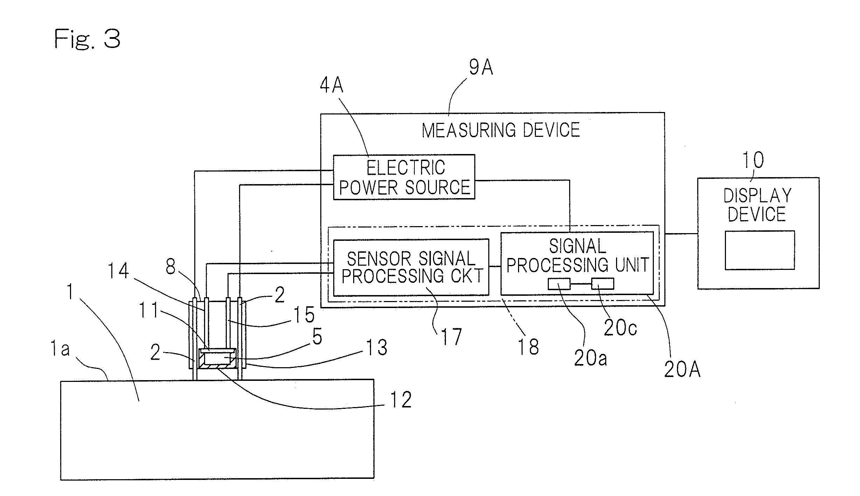

Fig. 3 illustrates a block diagram showing a conceptual construction of the hardening quality evaluating apparatus according to a second preferred embodiment of the present invention. In the description that follows, component parts similar to those shown and described in connection with the previous embodiment of the present invention are designated by like reference numerals and, therefore, the details thereof are not reiterated for the sake of brevity. In the example shown in Fig. 3, the measuring device, now identified by 9A, includes a direct current power source 4A. Also, the signal processing unit, now identified by 20A, is provided with a determining section 20a and an electric power control section 20c. In other words, the electric power control section 20c is operable to switch at least the direction and the magnitude of the electric current to be applied between the electric power supply electrodes 2 and 2. It is, however, to be noted that the direction and the magnitude of the electric current at a predetermined time intervals may be switched. The quality determining unit 18 may process a signal from the magnetic field sensor 5 each time this electric current is switched. In this construction, the hardening depth of the object to be inspected can be determined.

It is also to be noted that it is possible to supply the electric current of a single frequency, which does not change the frequency, to the object through the pair of the electric power supply electrodes with the use of an alternating current power source.

Where with the use of the alternating current power source the direct current is supplied to the object to be inspected, arrangement may be made so that by applying the electric current having varying directions and magnitude to the object to be inspected the intensity of or the magnitude and the direction of the magnetic field for each electric current varying in direction and magnitude can be measured. In this case, the hardening quality of the object to be inspected can be measured.

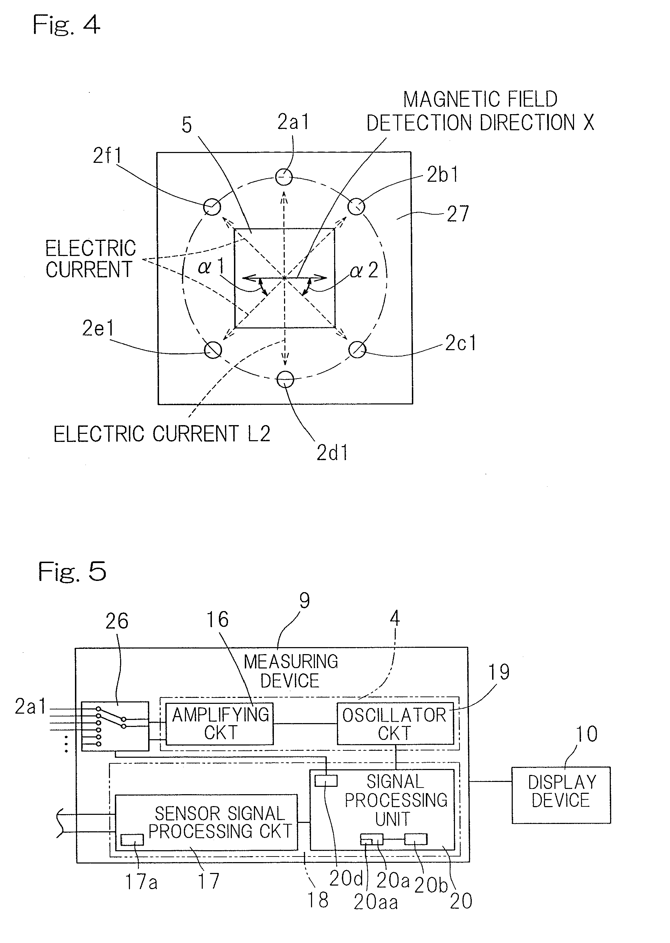

The hardening quality evaluating apparatus according to a third preferred embodiment of the present invention shown in Figs. 4 and 5 is similar to that according to any one of the previously described first and second embodiments of the present invention, but differs therefrom in that an electric current path changing unit 26 is additionally employed for switching from one of a plurality of electric current paths, which flow through the object 1 to be inspected, over to a different one of the electric current paths. The description will be made also with reference to Fig. 1. For the magnetic field sensor 5 employed in the apparatus according to the third embodiment of the present invention, a sensor capable of detecting the magnetic field 6 in one direction indicated by a symbol X in Fig. 4 is employed. As shown in Fig. 4, it is so arranged that the center of the magnetic field sensor 5 may be aligned with an intermediate point between pairs of electric power supply electrodes as will be described later. More specifically, the electric power supply electrodes are all arranged on the imaginary circle having its center aligned with the center of the magnetic field sensor 5, and two electrodes forming an electrode pair is symmetrically disposed with respect to this center. The pair of the electric power supply electrodes 2 and 2 is employed in a plural number, for example, in three pairs in the instance as shown, and the electric current path changing unit 26 is adapted to supply the electric current to one of the pairs of the electric power supply electrodes 2 and 2.

More specifically, the electric current path changing unit 26 referred to above is operable to sequentially selecting one of a path between electric power supply electrodes 2a1 and 2d1 (a first electrode pair), a path between electric power supply electrodes 2b1 and 2e1 (a second electrode pair) and a path between electric power supply electrodes 2c1 and 2f1 (a third electrode pair), all shown in Fig. 4, to thereby apply the electric current to the selected path, that is, the selected electrode pair. The first electric power supply electrode pair 2a1 and 2d1, the second electric power supply electrode pair 2b1 and 2e1, the third electric power supply electrode pair 2e1 and 2f1 and the magnetic field sensor 5 are integrally secured to a fixing member 27 such as, a sensor housing. The electric current path changing unit 26 is provided in the measuring device 9 and electrically

**EP 2 439 526 A1**

connected with the amplifying circuit 16 and others of the electric power source 4 as shown in Fig. 5. This electric current path changing unit 26 is comprised of, for example, a switching circuit. The signal processing unit 20 includes, in addition to the determining section 20a and the change of frequency instructing section 20b, both of which have been previously described, an electric current path change instructing section 20d. This electric current path change instructing section 20d supplies a switching instruction to the previously described switching circuit so that the electric current can be supplied to one of the path between the electric power supply electrodes 2a1 and 2d1, the path between the electric power supply electrodes 2b1 and 2e1 and the path between the electric current supply electrodes 2c1 and 2f1, that is, one of the first to third electrode pairs.

The electric power supply electrodes 2a1 and 2d1 are, as best shown in Fig. 4, arranged having been spaced from each other in a direction perpendicular to a direction of detection of the magnetic field by the magnetic field sensor 5. When the electric current is supplied to the electrodes 2a1 and 2d1 while those electrodes 2a1 and 2d1 are held in contact with a surface of the object 1 to be inspected (shown in Fig. 1), the electric current flows in the object 1 in a direction indicated by the arrow L2. The electric power supply electrodes 2b1 and 2e1 are arranged having been spaced from each other in a direction at an angle $\alpha1$ ($\alpha1$ being, for example, 45° in a counterclockwise direction) of inclination in a first direction relative to the direction of detection by the magnetic field by the magnetic field sensor 5. The electric power supply electrodes 2c1 and 2f1 are arranged having been spaced from each other in a direction at an angle $\alpha2$ ($\alpha2$ being, for example, 45° in a clockwise direction) of inclination in a second direction opposite to the first direction. Those electric power supply electrodes 2a1, 2d1, 2b1, 2e1, 2c1 and 2f1 are arranged on the single imaginary circle depicted on the fixing member 27.

Since the electric power supply electrodes 2a1 and 2d1 are arranged having been spaced from each other in the direction perpendicular to the direction of detection of the magnetic field, the direction of the magnetic field produced by an electric current between the electrodes 2a1 and 2d1 coincides with the direction of the magnetic field detected by the magnetic field sensor 5. For this reason, the detection value of the magnetic field sensor 5 is processed by the sensor signal processing circuit 17 without being corrected.

The electric power supply electrodes 2b1 and 2e1 are arranged having been spaced from each other in the direction at the angle $\alpha1$ of inclination in the first direction relative to the direction of detection of the magnetic field and the electric power supply electrodes 2c1 and 2f1 are arranged having been spaced from each other in the direction at the angle $\alpha2$ of inclination in the second direction opposite to the first direction of inclination represented by the angle $\alpha1$. In those cases, since the directions of magnetic fields produced by respective electric currents between the electrodes 2b1 and 2e1 and the electrodes 2c1 and 2f1 do not coincide with the direction of the magnetic field detected by the magnetic field sensor 5, the detection value of the magnetic field sensor 5 need be corrected.

By way of example, when an instruction is given to flow the electric current between the electric power supply electrodes 2b1 and 2e1, the magnetic field sensor 5 outputs the detection value which corresponds to the product of the actual magnitude of the produced magnetic field multiplied by $\sin(\alpha1)$. Accordingly, a detection value correcting section 17a of the sensor signal processing circuit 17 shown in Fig. 5 makes use of the trigonometric function in correcting to divide the outputted detection value by $\sin(\alpha1)$.

When an instruction is given to flow the electric current between the electric power supply electrodes 2c1 and 2f1, the magnetic field sensor 5 outputs the detection value which corresponds to the product of the actual magnitude of the produced magnetic field multiplied by $\sin(\alpha2)$. In such case, the detection value correcting section 17a makes use of the trigonometric function in correcting to divide the outputted detection value by $\sin(\alpha2)$.

Accordingly, as shown in Figs. 4 and 5, an average value calculator 20aa of the determining section 20a calculates the average value of the detection value of the magnetic field generated by the electric current flowing between the electric power supply electrodes 2a1 and 2d1, a correction value of the detected value of the magnetic field generated by the electric current flowing between the electric power supply electrodes 2b1 and 2c1, and a correction value of the detected value of the magnetic field generated by the electric current flowing between the electric power supply electrodes 2c1 and 2f1. The determining section 20a can calculate from the average value so calculated, the hardness in the in-depth direction of the object 1 to be inspected. When the average value is calculated in this way, the problem that the measuring accuracy tends to be degraded as a result of a change in magnitude of the magnetic field depending on the path of the electric current can be resolved.

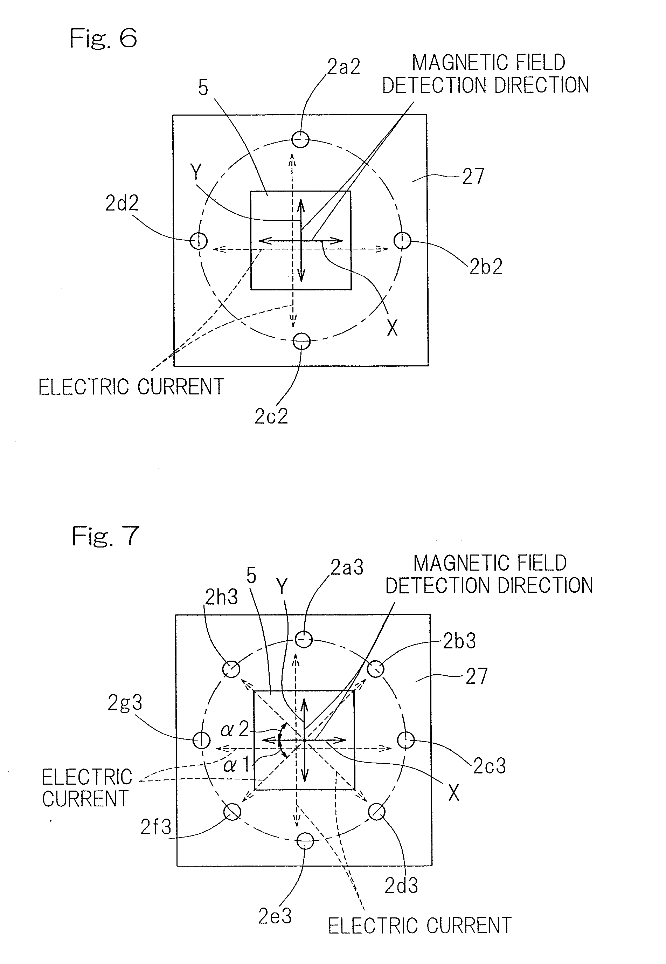

Fig. 6 illustrates the hardening quality evaluating apparatus according to a fourth preferred embodiment of the present invention. This hardening quality evaluating apparatus according to the fourth embodiment is similar to that according to the previously described third embodiment of the present invention, but differs therefrom in that in place of the magnetic field sensor employed in the practice of the third embodiment, the magnetic field sensor 5 that can detect the magnetic fields developed in two right angled directions, indicated by the arrows X and Y in Fig. 6, is used. The description will be made also with reference to Figs. 1 and 5. In this embodiment, the use is made of a plurality of pairs of the electric power supply electrodes 2 and 2 (two pairs employed in the instance as shown) and they are so arranged that the directions each between the electric power supply electrodes 2 and 2 of each electrode pair may coincide with the directions of the detected magnetic fields, respectively. The directions are orthogonal to each other. The electric current path changing unit 26 referred to previously performs switching so that the electric current can be supplied to one of the electric power supply electrodes 2a2 and 2c2 (a first electrode pair) and the electric power supply electrodes 2b2 and 2d2 (a second electrode pair), each of which pairs is arranged symmetrically. The average value calculator 20aa referred to previously calculates an average value of the detection value of the magnetic field generated by the electric current flowing between the electric power supply electrodes 2a2 and 2c2 and the detection value of the magnetic field generated by the electric current flowing between the electric power supply electrodes 2b2 and 2d2. The determining section 20a can calculate from the average value so calculated, the hardness in the in-depth direction of the object 1 to be inspected.

The hardening quality evaluating apparatus designed in accordance with a fifth preferred embodiment of the present invention and shown in Fig. 7 is similar to that according to any one of the previously described second and third embodiments of the present invention, but differs therefrom in that in place of the magnetic field sensor employed in the practice of any one of the second and third embodiments, the magnetic field sensor 5 that can detect the magnetic fields developed in two right angled directions is employed. Also, the use is made of a plurality of pairs of the electric power supply electrodes 2 and 2 (four pairs employed in the instance as shown) and the electric current path changing unit 26 shown in Fig. 5 performs switching so that the electric current can be supplied to one of the electric power supply electrodes 2a3 and 2e3 (a first electrode pair), the electric the power supply electrodes 2b3 and 2f3 (a second electrode pair), the electric power supply electrodes 2c3 and 2g3 (a third electric pair) and the electric power supply electrodes 2d3 and 2h3 (a fourth electrode pair), each of which pairs is arranged symmetrically. The magnetic fields developed by the electric current flowing in a path between the electric power supply electrodes 2a3 and 2e3 and a path between the electric power supply electrodes 2c3 and 2g3 does not require the correction previously described since they coincide with the respective directions detected by the magnetic field sensor 5.

In contrast thereto, the electric power supply electrodes 2b3 and 2f3 and the electric power supply electrodes 2d3 and 2h3 are arranged having been spaced from each other in respective directions at an angle α1 (α1 being, for example, 45° in the counterclockwise direction) of inclination in a first direction and at an angle α2 (α2 being, for example, 45° in the clockwise direction) of inclination in a second direction opposite to the first direction, both relative to X which is one of the two directions X and Y of detection of the magnetic fields by the magnetic field sensor 5. The magnetic fields developed by the electric current flowing between the electric power supply electrodes 2b3 and 2f3 and between the electric power supply electrodes 2d3 and 2h3 do not coincide with the direction of the magnetic fields detected by the magnetic field sensor, the detection values of the magnetic field sensor 5 require the correction.

For example, when an instruction is given to flow the electric current between the electric power supply electrodes 2b3 and 2f3, the detection value correcting section 17a performs a correction to divide the outputted detection value by sin(α1). On the other hand, when an instruction is given to flow the electric current between the electric power supply electrodes 2d3 and 2h3, the detection value correcting section 17a performs a correction to divide the outputted detection value by sin(α2). Accordingly, the average value calculator 20aa in the determining section 20a calculates an average value of the detection value of the magnetic field developed by the electric current flowing between the electric power supply electrodes 2a3 and 2e3, the detection value of the magnetic field developed by the electric current flowing between the electric power supply electrodes 2c3 and 2g3, the corrected value of the magnetic field developed by the electric current flowing between the electric power supply electrodes 2b3 and 2f3, and the corrected value of the magnetic field developed by the electric current flowing between the electric power supply electrodes 2d3 and 2h3. The determining section 20a can calculate from the average value so calculated, the hardness in the in-depth direction of the object 1 to be inspected.

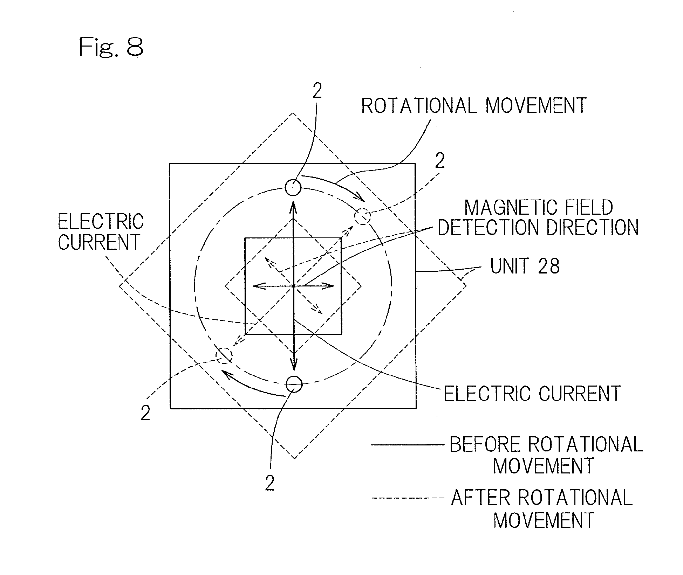

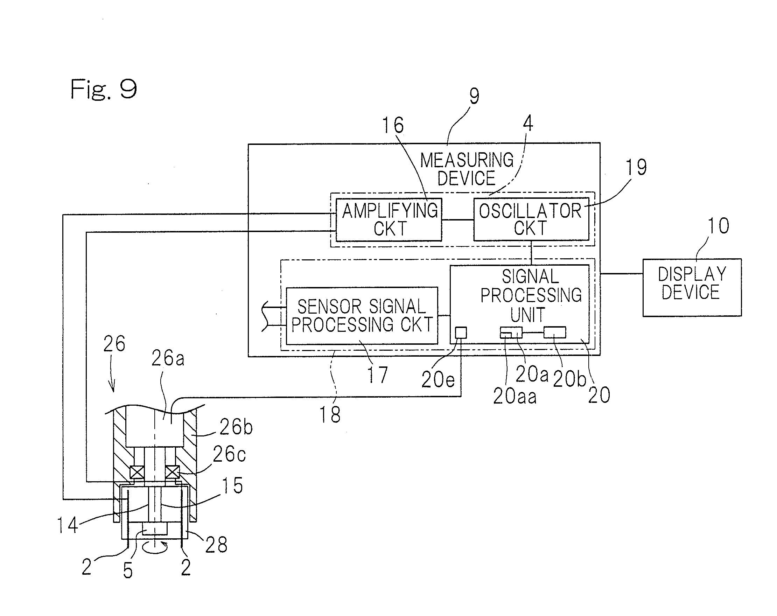

Figs. 8 and 9 illustrate the hardening quality evaluating apparatus according to a sixth preferred embodiment of the present invention. The hardening quality evaluating apparatus shown therein in accordance with the sixth embodiment makes use of, in place of the electric current path changing unit 26 shown in and described with reference to Fig. 5, an electric current path changing unit 26 of a structure which includes a rotary drive source 26a, a casing 26b and a bearing 26c and which is so configured that the magnetic field sensor 5 and the electric power supply electrodes 2 and 2 can be rotated together by the rotary drive source 26a relative to the casing 26b. The description will be made also with reference to Fig. 1. A unit 28, in which the magnetic field sensor 5 and the electric power supply electrodes 2 and 2 are integrated together, is so structured as to be angularly displaceable through the bearing 26c relative to the object 1 to be inspected. The unit 28 is rotated by the rotary drive source 26a such as, a motor or the like through a predetermined angle. The signal processing unit 20 includes a determining section 20a, a change of frequency instructing section 20b and a rotation instructing section 20e. The rotation instructing section 20e issues a rotation instruction for rotary driving the unit 28. The magnetic field sensor 5 employed in this example can detect the magnetic field 6 developed in one direction. Only one pair of the electric power supply electrodes 2 and 2 is arranged symmetrical with respect to the center of rotation of the magnetic field sensor 5 while having been spaced with the magnetic field sensor 5 intervening therebetween. Accordingly, the average value calculator 20aa employed in the determining section 20a detects a detection value of the magnetic field developed by the electric current flowing between the electric power supply electrodes 2 and 2 for each rotational angle and then calculates an average value of them. According to this example, since the unit 28 is rotated, the necessity of correcting the detected value of the developed magnetic field can be eliminated and the measuring accuracy can be increased.

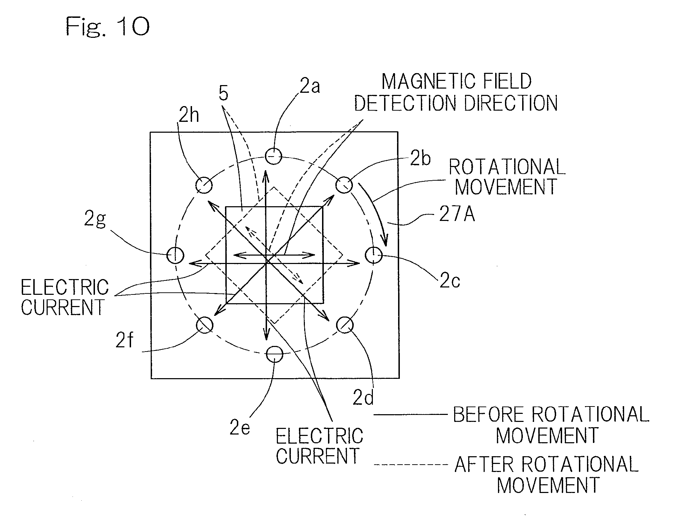

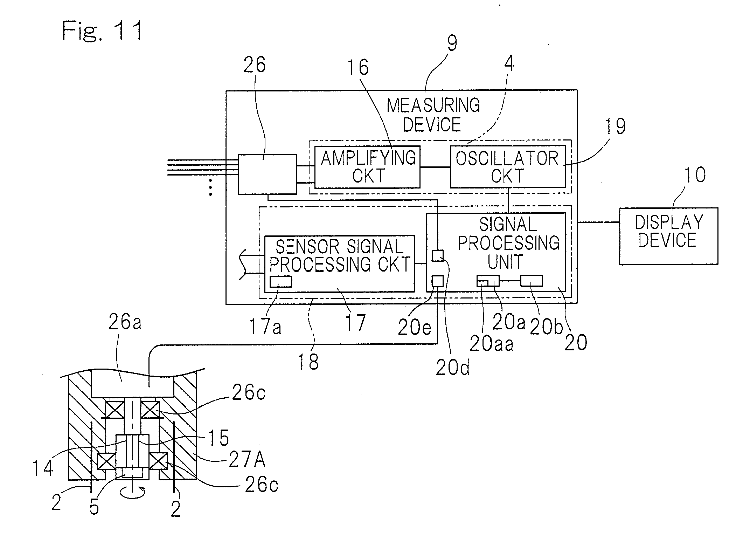

In the quality evaluating apparatus designed in accordance with a seventh preferred embodiment of the present invention and shown in Figs. 10 and 11, the use is made of a fixing member 27A for securing a plurality of electric power supply electrodes 2 and 2 and the magnetic field sensor 5 is so structured as to be angularly displaceable relative to the fixing member 27A. The description will be made also with reference to Fig. 1. In the practice of this seventh embodiment of the present invention, the electric current path changing unit 26 includes a rotary drive source 26a, the fixing member 27A and a bearing 26c. The magnetic field sensor 5 can detect the magnetic field 6 developed in one direction. Also, the electric power supply electrodes 2 and 2 are employed in a plurality of pairs (four pairs employed in the instance as shown) and switching is performed so that the electric current can be supplied to any one of the electrode pairs. The rotation instructing section 20e supplies a rotation instruction to the rotary drive source 26a for the magnetic field sensor 5 so that the direction of the magnetic field developed and the direction of the magnetic field detected by the magnetic field sensor 5 may coincide with each other. Accordingly, the average value calculator 20aa detects a detection value of the magnetic field developed by the electric current flowing the corresponding electric power supply electrodes 2 and 2 for each rotation and then calculates an average value of them. According to this seventh embodiment, since the magnetic field sensor 5 is rotated, the necessity of correcting the detection value of the developed magnetic field can be eliminated and the measuring accuracy can be increased.

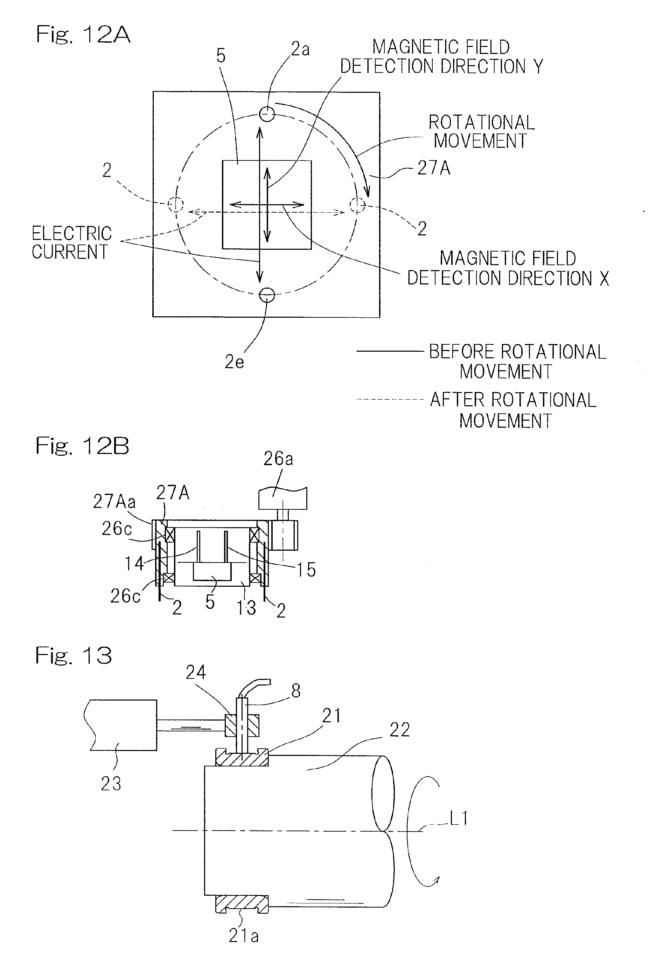

Reference will now be made to Figs. 12A and 12B for the discussion of the hardening quality evaluating apparatus designed in accordance with an eighth preferred embodiment of the present invention. In this hardening quality evaluating apparatus, the magnetic field sensor 5 is secured to a sensor housing 13 or the like and the electric power supply electrodes 2 and 2 are made angularly displaceable relative to the magnetic field sensor 5 so secured. The details will now be described also with reference to Figs. 1 and 9. A pair of the electric power supply electrodes 2 and 2 is rigidly secured to the fixing member 27A and this fixing member 27A is so arranged as to be rotated by the rotary drive source 26a. As best shown in Fig. 12B, for example, a gear 27Aa is provided on an outer peripheral surface of the fixing member 27A, which gear 27Aa is meshed with a pinion gear mounted on a motor shaft of the rotary drive source 26a for rotation together therewith. A sensor housing 13 is provided on an inner peripheral surface of the fixing member 27A through bearings 26c and 26c. For the magnetic field sensor 5, what can detect the magnetic field developed in a plurality of directions (two right angled directions in this instance as shown) is employed. The rotation instructing section 20e supplies a rotation instruction to the rotary drive source for the fixing member 27A so that the direction of the magnetic field, developed when the electric power is supplied between the electric power supply electrodes 2 and 2, coincides with the direction of the magnetic field detected by the magnetic field sensor 5. Accordingly, the magnetic field developed by the electric current flowing from the electric power supply electrodes 2a and 2e (shown by the solid lines in Figs. 12A) before the rotational movement is detected in a magnetic field detection X direction and the magnetic field developed by the electric current flowing from the electric power supply electrodes 2 and 2 (shown by the phantom lines in Figs. 12A) after the rotational movement is detected in a magnetic field detection Y direction. The average value calculator 20aa calculates an average value of the magnitudes of the magnetic fields. Even in the case of this example, correction of the detection value of the magnetic field can be eliminated and the measuring accuracy can be increased.

Although in any one of the third to eighth embodiments of the present invention, the alternating current power source is employed, the direct current power source together with the alternating current power source or the direct current power source in place of the alternating current power source may be employed to supply the direct current, or the electric current of a single frequency through the electric power supply electrodes to the object to be inspected.

Fig. 13 illustrates one example of a non-destructive inspection performed with the use of the hardening quality evaluating apparatus designed in accordance with any one of the previously described first to eighth embodiments of the present invention. In the example shown therein, the hardening quality of a rolling surface 21 a of an inner ring 21 of a bearing is evaluated. The inner ring 21 is mounted on a reduced diameter portion of a rotary shaft 22 and the rotary shaft 22 is so arranged as to be rotated by a drive source (not shown) about an longitudinal axis L1 of the rotary shaft 22. A probe advance and retraction drive source 23 has a free end provided with a fixing member 24 for fixing a probe 8, which is an detecting head, and the probe 8 fixed to the fixing member 24 is moved by the drive of the probe advance and retraction drive source 23 in a direction parallel to a direction of the longitudinal axis L1. For the probe advance and retraction drive source 23, a fluid operated cylinder or a combination of a motor and a ball screw mechanism may be employed.

The fixing member 24 urges the probe 8 against the rolling surface 21a with an appropriate urging force. The rotary shaft L1 is rotated to allow the probe 8 to slide in contact with the rolling surface 21 a of the inner ring 21 over the entire circumference thereof so that the hardening quality distribution can be detected at all locations on the periphery or some locations on the periphery. In this way, since the hardness distribution can be evaluated on a non-destructive basis on line, inspection of the total number, that is, inspection of all of the products can be carried out and the reliability of the guarantee can be enhanced accordingly. It is to be noted that without the use of the probe advance and retraction drive source 23, the fixing member 24 and others, the probe 8 may be manually moved so that the hardening quality of the rolling surface 21a or the like can be evaluated.

Any one of the various embodiments of the present invention hereinbefore fully described may include the following modes. It is to be noted that for the sake of brevity, the description will be made using the reference numerals employed in describing any one of the various embodiments of the present invention.

[Mode 1]

The hardening quality evaluating apparatus according to this mode 1 may be designed such to enable the quality determining unit 18, employed in any one of the previously described embodiments of the present invention, to include a display device 10 for displaying the hardening quality determined by such quality determining unit 18. The hardening quality displayed on this display device 10 can be visually checked and the efficiency of inspection can be increased.

The quality determining unit 18 referred to above may have a determining section 20a for determining the presence of an abnormality in quality in the event that the measuring hardening quality lowers the preset quality value, which is any set value. With the determining section 20a used in this way, the presence or absence of the quality abnormality can be easily determined.

[Mode 2]

In the quality evaluating apparatus according to the mode 2, the quality determining unit 18 employed in any one of the previously described embodiments of the present invention includes a determining section 20a for determining the presence of an abnormality in quality in the event that the determined hardening quality lowers the preset quality value.

For the magnetic field sensor 5, any one of, for example, a magnetic impedance element (MI sensor (MI: Magneto-Impedance Element), a magneto resistance element (MR sensor (MR: Magneto-Resistance Effect)), a giant magnetoresistive element (GM sensor (GMR: Magneto-Resistive)), a Hall sensor, and a flux gate sensor can be employed. Where only the alternating current magnetic field is measured, a wire-wound magnetic field sensor may be employed.

It is also possible to use one pair of the electric power supply electrodes 2 and 2 and the magnetic sensor 5, which are members separate from each other. Of a bearing, an outer ring rolling surface, an outer ring outer diametric surface, an outer ring end face or an outer inner diametric surface may be subjected to the hardening quality evaluation. Similarly, an inner ring inner diametric surface, an inner ring end face, an inner ring outer diametric surface, a rolling surface of a rolling element or an end face of a rolling element may be subjected to the hardening quality evaluation. Nevertheless, the object to be measured may include any other device having rolling elements than the bearing and its component.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

[Reference Numerals]

| | |
|---|---|
| 1 | Object to be inspected |
| 2 | Electric power supply electrode |
| 4 | Electric power source |
| 5 | Magnetic field sensor |
| 10 | Display device |
| 18 | Quality determining unit |
| 19 | Oscillator circuit |
| 20 | Signal processing unit |
| 20a | Determining section |
| 20b | Change of frequency instructing section |
| 26 | Electric current path changing unit |
| 27, 27A | Fixing member |

**Claims**

1. An apparatus for evaluating the hardening quality of an object to be inspected by applying an electric current to the object and then measuring a magnetic field developed by an electric current flowing through the object to be inspected, the apparatus comprising:

an electric power supply electrode adapted to be held in contact with a surface of the object to be inspected;
an electric power source for applying the electric current to the object through the electric power supply electrode;
a magnetic field sensor for measuring the magnetic field developed by the electric current flowing through the object to be inspected by the electric power source; and
a quality determining unit for determining the hardening quality of the object through the magnetic field measured by the magnetic field sensor.

2. The apparatus as claimed in claim 1, wherein the electric power source includes an oscillator circuit for varying the frequency of the electric current to be applied.

3. The apparatus as claimed in claim 1, wherein the electric power supply electrode includes a pair of electric power supply electrodes held in contact with the object to be inspected, and the magnetic field sensor is arranged between the pair of electric power supply electrodes.

4. The apparatus as claimed in claim 1, wherein the electric power source includes an alternating electric power source, and the quality determining unit includes a change of frequency instructing section for changing the frequency, outputted by the alternating electric power source, to various values and the quality determining unit is configured to determine the hardening quality by measuring the magnetic field at the various frequencies so changed by the change of frequency instructing section.

5. The apparatus as claimed in claim 1, wherein the quality determining unit determines, as the hardening quality, at least one of the surface hardness, the hardness distribution in an in-depth direction and the hardening depth of the object to be measured.

6. The apparatus as claimed in claim 1, wherein the magnetic field sensor is mounted on a sensor substrate which is in turn integrally secured to a sensor housing, made of a non-magnetic material, together with the pair of the electric power supply electrodes.

7. The apparatus as claimed in claim 1, which is used in evaluating the hardening quality of a device having a rolling element or a component of a device having a rolling element.

8. The apparatus as claimed in claim 1, further comprising an electric current path changing unit for changing the path of the electric current flowing through the object to be inspected and wherein the magnetic field sensor measures a plurality of the magnetic fields generated for each electric current path so changed and the quality determining unit determines the hardening quality of the object through the plurality of magnetic fields measured by the magnetic field sensor for each electric current path so changed.

9. The apparatus as claimed in claim 8, wherein the quality determining unit is configured to average the values of the plurality of the measured magnetic fields.

10. The apparatus as claimed in claim 8, wherein the electric current path changing unit is of a type in which the magnetic field sensor and the electric power supply electrode are made rotatable together and the magnetic field sensor and the electric power supply electrode, which are integrated, are so structured as to be angularly displaceable relative to the object to be inspected.

11. The apparatus as claimed in claim 8, wherein the electric power supply electrode includes a plurality of electric power supply electrodes and further comprising a fixing member for fixing the plurality of the electric power supply electrodes and in which the electric current path changing unit applies an electric current sequentially to one of paths between a predetermined electric power supply electrodes out of the plurality of the electric power supply electrodes.

12. The apparatus as claimed in claim 11, wherein the magnetic field sensor is rotatable relative to the fixing member and is capable of measuring the magnetic field developed by the electric current flowing between the electric power supply electrodes, which is sequentially supplied to any one of the paths.

13. The apparatus as claimed in claim 8, the electric power supply electrode includes one or more pairs of electric power supply electrodes and further comprising a fixing member for fixing the one or more pairs of electric power supply electrodes, the fixing member being made rotatable relative to the magnetic field sensor.

14. A method for evaluating the hardening quality of an object to be inspected by applying an electric current to the object and then measuring a magnetic field developed by an electric current flowing through the object to be inspected, the method comprising:

i) applying a direct current of a certain current value or an alternating current of a certain current value and a certain frequency to the object to be inspected;
ii) measuring the magnetic field developed by the electric current flowing through the object to be inspected, the flowing electric current being caused by the applied electric current; and

repeating the steps (i) and (ii) above by changing the certain electric current value or the certain frequency to a different value to thereby determine the hardening quality of the object by using those measured magnetic fields.

**15.** The method as claimed in claim 14, wherein as the hardening quality, at least one of a surface hardness, a hardness distribution in an in-depth direction, and a hardening depth of the object to be inspected is evaluated.

Fig. 1

Fig. 2

MEASURING DEVICE

AMPLIFYING CKT

OSCILLATOR CKT

DISPLAY DEVICE

SENSOR SIGNAL PROCESSING CKT

SIGNAL PROCESSING UNIT

16  9  4  19  10  17  18  20a  20b  20

1  1a  14  8  11  2  2  15  5  13  12

EP 2 439 526 A1

Fig. 3

MEASURING DEVICE 9A

4A

ELECTRIC POWER SOURCE

10
DISPLAY DEVICE

SENSOR SIGNAL PROCESSING CKT

SIGNAL PROCESSING UNIT

17

18

20a

20c

20A

1a

1

14

8

11

2

2

15

5

13

12

EP 2 439 526 A1

17

Fig. 4

ELECTRIC CURRENT

MAGNETIC FIELD DETECTION DIRECTION X

ELECTRIC CURRENT L2

Fig. 5

MEASURING DEVICE

AMPLIFYING CKT

OSCILLATOR CKT

DISPLAY DEVICE

SIGNAL PROCESSING UNIT

SENSOR SIGNAL PROCESSING CKT

## Fig. 6

## Fig. 7

Fig. 8

ROTATIONAL MOVEMENT

MAGNETIC FIELD
DETECTION DIRECTION

UNIT 28

ELECTRIC
CURRENT

ELECTRIC CURRENT

—————— BEFORE ROTATIONAL
MOVEMENT

--------- AFTER ROTATIONAL
MOVEMENT

Fig. 9

EP 2 439 526 A1

Fig. 10

Fig. 11

Fig. 12A

MAGNETIC FIELD
DETECTION DIRECTION Y

ROTATIONAL
MOVEMENT

27A

2

ELECTRIC
CURRENT

MAGNETIC FIELD
DETECTION DIRECTION X

2e

——— BEFORE ROTATIONAL
MOVEMENT

-------- AFTER ROTATIONAL
MOVEMENT

Fig. 12B

26a

27Aa
27A
26c
14
15
26c
2    5    13    2

Fig. 13

24
8
21
22

23

L1

21a

<table>
<tr><td colspan="2">**INTERNATIONAL SEARCH REPORT**</td><td>International application No.<br>PCT/JP2010/058977</td></tr>
</table>

**A. CLASSIFICATION OF SUBJECT MATTER**
*G01N27/80*(2006.01)i

According to International Patent Classification (IPC) or to both national classification and IPC

**B. FIELDS SEARCHED**

Minimum documentation searched (classification system followed by classification symbols)
G01N27/72-27/90, G01N27/00-27/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
JSTPlus/JST7580(JDreamII)

**C. DOCUMENTS CONSIDERED TO BE RELEVANT**

| Category* | Citation of document, with indication, where appropriate, of the relevant passages | Relevant to claim No. |
|---|---|---|
| Y | JP 2007-327924 A (Osaka Gas Co., Ltd.),<br>20 December 2007 (20.12.2007),<br>entire text; all drawings<br>(Family: none) | 1-15 |
| Y | JP 7-260743 A (Hitachi, Ltd.),<br>13 October 1995 (13.10.1995),<br>entire text; all drawings<br>(Family: none) | 1-15 |
| Y | JP 2001-194340 A (Osaka Gas Co., Ltd.),<br>19 July 2001 (19.07.2001),<br>entire text; all drawings<br>(Family: none) | 1-15 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>17 August, 2010 (17.08.10) | Date of mailing of the international search report<br>31 August, 2010 (31.08.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/058977 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2009-47664 A  (Toyota Motor Corp.), 05 March 2009 (05.03.2009), entire text; all drawings (Family: none) | 1-15 |
| Y | JP 2007-64817 A  (Denshijiki Industry Co., Ltd.), 15 March 2007 (15.03.2007), entire text; all drawings (Family: none) | 1-15 |
| Y | JP 2004-108873 A  (Toyota Motor Corp.), 08 April 2004 (08.04.2004), entire text; all drawings (Family: none) | 1-15 |
| Y | JP 6-222021 A  (Tetsuo SHOJI), 12 August 1994 (12.08.1994), entire text; all drawings (Family: none) | 4,14-15 |
| Y | JP 8-313473 A  (Toyota Motor Corp.), 29 November 1996 (29.11.1996), entire text; all drawings (Family: none) | 4,14-15 |
| Y | JP 10-26609 A  (National Koki Kabushiki Kaisha), 27 January 1998 (27.01.1998), entire text; all drawings & US 6232774 B1 | 6 |
| Y | JP 2000-74756 A  (NKK Corp.), 14 March 2000 (14.03.2000), entire text; all drawings (Family: none) | 8-13 |
| Y | JP 9-304346 A  (Nippon Steel Corp.), 28 November 1997 (28.11.1997), entire text; all drawings (Family: none) | 8-13 |

Form PCT/ISA/210 (continuation of second sheet) (July 2009)

**EP 2 439 526 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009134727 A
- JP 2004309355 A
- JP 2007064817 A
- JP 2009088813 A